# EUROPEAN PATENT APPLICATION

(11) **EP 1 987 906 A1**
(43) Date of publication of application: **05.11.2008**
(21) Application number: 07024796.0
(22) Date of filing: 20.12.2007
(51) Int. Cl.: B23K 11/31

(54) **Electric driving unit for X-type Gun**

(30) Priority: 02.05.2007 JP 2007121572
(71) Applicant: Obara Corporation, Ayase-shi Kanagawa-ken 252-1104 (JP)
(72) Inventor: Sato, Yoshio, Ayase-shi Kanagawa-ken 252-1104 (JP)
(74) Representative: Goddar, Heinz J.

(57) **Abstract**

There is provided an electric driving unit for X-type gun capable of preventing a pressure application driving body (8) from being troubled inside thereof, stabilizing holding of the gun, operating with precision while reducing a trouble during a welding operation, excluding interference with a workpiece and a jig, and also capable of stabilizing a swinging motion of the gun arms (1, 3), executing swinging motion naturally, simplifying attachment and detachment of the components as the electric driving unit and executing maintenance with very ease and precision. The electric driving unit for X-type gun comprises a rotary shaft (17) provided in the motor (16) and formed of a hollow shaft to which a screw shaft (18) is secured, a guide bearing (22) provided at the front end side of the motor (16) for guiding the pressure application shaft (9), and another bearing (15) provided in a case (13) of the pressure driving body (8) at an end portion thereof for causing the other arm (3) to be journalled to the pressure application driving body (8) by a pivotal shaft (14), and said pressure application shaft (9) having a part to be driven by a motor (16) and pulled into the motor (16), a nut (20) to be threaded with the screw shaft (18), a hollow part (21) for containing therein a tip end side of the screw shaft (18), and a bearing (11) for causing one gun arm (1) to be journalled to the pressure application shaft (9) by a pivotal shaft (10).

## Description

### FIELD OF THE INVENTION

The invention relates to an electric driving unit for X-type gun comprising two gun arms journalled on a pivotal shaft, respectively, at the middle portions thereof, and provided with electrodes at tip ends which are opposite to each other, respectively, a pressure application shaft connected to one gun arm and a pressure application driving body connected to the other gun arm, respectively, at the rear ends of both gun arms.

### BACKGROUND OF THE INVENTION

There has been an electric X-type gun comprising two gun arms journalled on a pivotal shaft, respectively, at the middle portions thereof, and provided with electrodes at tip ends which are opposite to each other, respectively, a pressure application shaft connected to one gun arm, and a motor having a pressure application driving body attaching thereto connected to the other gun arm, respectively, at the rear ends of both gun arms, wherein the motor and the pressure application driving body are combined with each other (for example, refer to JP 2001-321955A).

In the conventional electric X-type gun wherein a known motor and a pressure application driving body are combined with each other, a rotary shaft of the motor and a nut are integrated, and a screw shaft threaded with the nut is connected with one gun arm at the tip end serving as the pressure application shaft so that the screw shaft serving as the pressure application shaft is exposed outside the motor to cause the screw to be adhered by a spatter during a welding operation, which arises a possibility of causing the spatter to be bitten in a threading portion between the screw shaft and the nut. As a result, an operation of the X-type gun is stopped or the life of the nut is shortened due to biting of the spatter. Further, a bending load is applied to the screw shaft serving as the pressure application shaft when the gun arm is executes swinging motion by the opening and closing operations due to application of a pressure so that balls inside the ball nut of a ball screw can not uniformly bear the load applied thereto, arising a possibility of shortening of the life of the ball screw. As a result, diameters of the screw shaft and nut have to be made larger in order to endure the bending load, arising a possibility of causing the motor to be large-sized.

### SUMMARY OF THE INVENTION

The invention has been developed in view of the conventional problems described as above, and it is an object of the invention to provide an electric driving unit comprising a screw shaft fixed to a rotary shaft of a motor, a nut threaded with the screw shaft serving as a pressure application shaft, wherein the pressure application shaft has a part which is driven to be pulled therein, thereby obtaining the electric driving unit for X-type gun capable of preventing a pressure application driving body from being troubled inside thereof, stabilizing holding of the gun, executing operation with precision while reducing a trouble during a welding operation, excluding interference with a workpiece and a jig, and also capable of stabilizing a swinging motion of the gun arms, executing swinging motion naturally, simplifying attachment and detachment of the components as the electric driving unit and executing maintenance with very ease and precision.

Further, it is another object of the invention to provide an electric driving unit for X-type gun capable of rotating the screw shaft through manual operation holes when power is failed or the motor and a pressure application driving part are troubled, which is advantageous in maintenance thereof.

To achieve the above objects, an electric driving unit for X-type gun comprises two gun arms journalled on a pivotal shaft, respectively, at the middle portions thereof, and provided with electrodes at tip ends which are opposite to each other, respectively, a pressure application shaft connected to one gun arm and a pressure application driving body connected to the other gun arm, respectively, at the rear ends of both gun arms, characterized in further comprising a rotary shaft provided in the motor and formed of a hollow shaft to which a screw shaft is secured, a guide bearing provided at the front end side of the motor for guiding the pressure application shaft, and another bearing provided in a case of the pressure driving body at an end portion thereof for causing the other arm to be journalled to the pressure application driving body by a pivotal shaft, and said pressure application shaft having a part to be driven by a motor and pulled into the motor, a nut to be threaded with the screw shaft, a hollow part for containing therein a tip end side of the screw shaft, and a bearing for causing one gun arm to be journalled to the pressure application shaft by a pivotal shaft.

According to the invention, the nut at the pressure application shaft side is allowed to mesh with the screw shaft integrated with the rotary shaft of the motor, while the bearing is provided in the pressure application shaft for causing one gun arm to be journalled to the pressure application shaft by the pivotal shaft and another bearing is provided in the end portion of the case of the pressure application driving body for causing the other gun arm to be journalled to the pressure application driving body by the other pivotal shaft, thereby obtaining the electric driving unit for X-type gun capable of rendering the motor small-sized, causing a spatter and so forth from the pressure application shaft to hardly enter the motor, satisfying the protection between the nut and the screw shaft, sufficiently enduring a bending stress from the gun arm during the welding operation, making outer dimensions of the motor small, rendering the gun to be held with more stability, excluding interference with the workpiece and the jig, executing welding operation with very ease, stabilizing the swinging motion of the gun, executing swinging motion naturally, simplifying attachment and detachment of the components as the electric driving unit, and executing the maintenance with very ease and precision.

Further, the manual operation holes for the screw shaft are provided at the lower end of the pressure application driving body on the side faces thereof, thereby obtaining the electric driving unit for X-type gun capable of rotating the screw shaft through the manual operation holes when power fails or the motor and the pressure application driving part are troubled, which is advantageous in the maintenance thereof.

### BRIEF DESCRIPTION OF THE DRAWINGS

Fig. 1 is a schematic side view of an electric X-type gun provided with an electric driving unit according to a first embodiment of the invention in which a motor and a pressure application driving body are combined with each other;
Fig. 2 is a plan view of the electric X-type gun in Fig. 1;
Fig. 3 is a longitudinal sectional view of the electric driving unit which is a major part of the electric X-type gun in Fig. 1;
Fig. 4 is a plan view of the electric driving unit in Fig. 3;
Fig. 5 is a front view of an electric driving unit according to a second embodiment of the invention in which a motor and a pressure application driving body are combined with each other; and
Fig. 6 is a sectional view taken along arrows A-A in Fig. 5.

### PREFERRED EMBODIMENT OF THE INVENTION

### First Embodiment

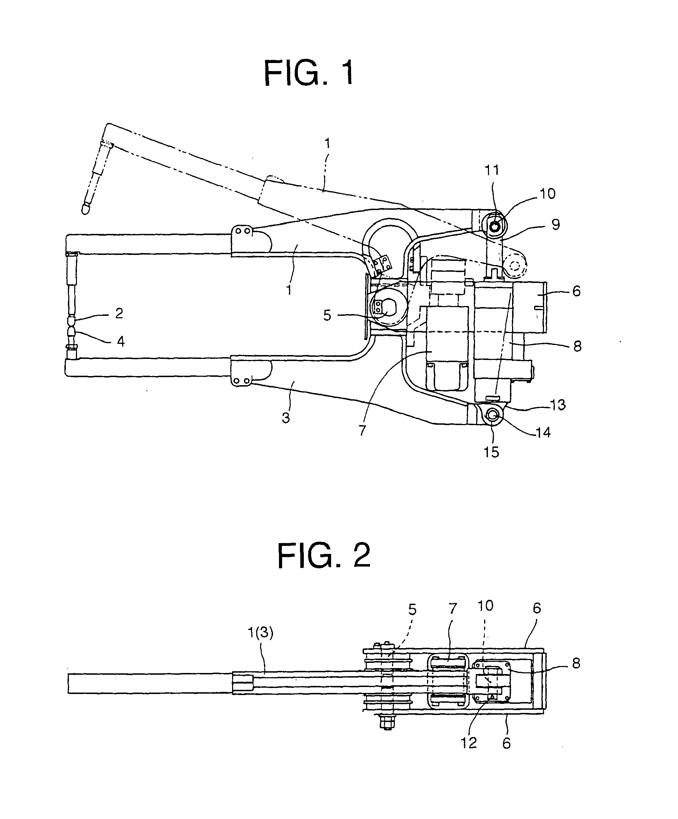

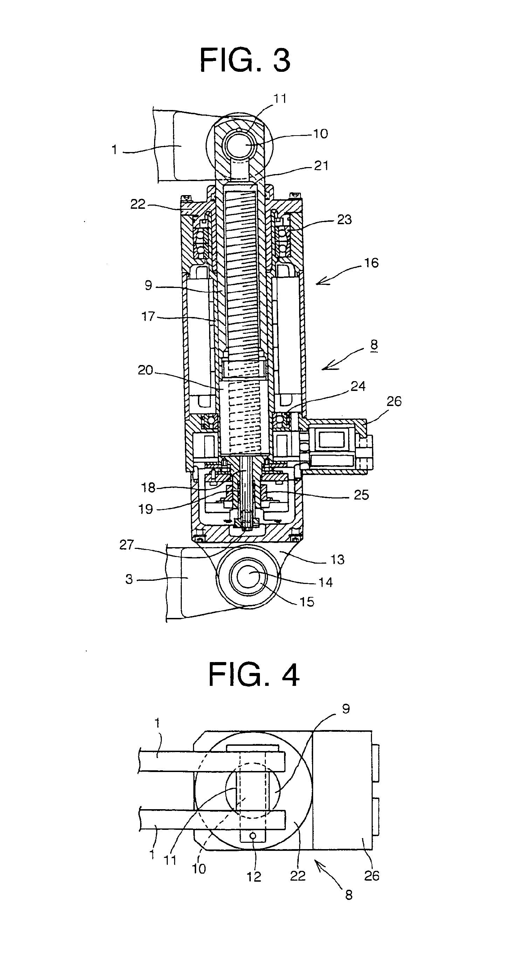

A first embodiment of the invention is described with reference to the attached drawings. Fig. 1 is a schematic side view of an electric X-type gun provided with an electric driving unit according to the invention in which a motor and a pressure application driving body are combined with each other, Fig. 2 is a plan view of the electric X-type gun in Fig. 1, Fig. 3 is a longitudinal sectional view of the electric driving unit which is a major part of the electric X-type gun in Fig. 1, and Fig. 4 is a plan view of the electric driving unit in Fig. 3.

In Figs. 1 to 4, denoted by 1 is one gun arm provided with an electrode 2 at the tip end thereof, and 3 is the other gun arm provided with an electrode 4 at the tip end thereof which is opposite to the electrode 2.

Respective middle portions of both the gun arms 1, 3 are journalled on a pivotal shaft 5. The pivotal shaft 5 is provided at the tip end of a gun bracket 6 which is connected to a wrist of a robot (not shown). An inverter transformer 7 is attached to and held by the gun bracket 6 behind the pivotal shaft 5.

A pressure application shaft 9 protruding from a pressure application driving body 8 is connected to a rear end of the gun arm 1 by a pivotal shaft 10 such as a hinge pin, and a bearing 11 is provided at the tip end of the pressure application shaft 9 to be journalled on the pivotal shaft 10 which is prevented from being come off, for example, by a stopper pin 12. Further, an end of a case 13 of the pressure application driving body 8 is connected to a rear end of the gun arm 3 by a pivotal shaft 14, for example, such as a hinge pin, and a bearing 15 is provided at the end portion of the case 13 of the pressure application driving body 8 to be journalled on the pivotal shaft 14 which is prevented from being come off, for example, by a stopper pin.

An electric motor 16 positioned inside the pressure application driving body 8 is combined with the pressure application driving body 8, and a rotary shaft 17 of the motor 16 is formed of a hollow shaft. A fixed part 19 is formed on an outer periphery of a screw shaft 18 such as a ball screw, for example, by fastening with a screw or wedge coupling and so forth, and the screw shaft 18 is connected to the hollow portion of the rotary shaft 17 by way of the fixed part 19, thereby integrating the rotary shaft 17 with the screw shaft 18. A nut 20, for example, such as a ball nut is integrally provided at the rear end side of the pressure application shaft 9 integrally or by fastening with a screw and so forth, wherein a screw formed in the nut 20 is to be threaded with the screw of the screw shaft 18. The nut 20 provided at the rear end side of the pressure application shaft 9 is positioned inside the hollow part of the rotary shaft 17 so as to be reciprocated therein.

A hollow part 21 for containing the tip end side of the screw shaft 18 is formed inside the pressure application shaft 9. Further, the pressure application shaft 9 is guided by a guide bearing 22 provided at the front end side of the motor 16, to execute a linear reciprocation motion.

The pressure application driving body 8 and the motor 16 are combined with each other, and the bearings 11, 15 are provided such that the tip end of the pressure application shaft 9 is connected to the gun arm 1 by the pivotal shaft 10, and the end portion of the case 13 of the pressure application driving body 8 is connected to the gun arm 3 by the pivotal shaft 14, thereby constituting the electric driving unit.

Accordingly, portions extending from middle portions to rear portions of the gun arms 1, 3 are set to be united in agreement with the dimensions of the electric driving unit, while the gun arms 1, 3 are formed to have various shapes at the portions extending from middle portions to front portions, so that changes in a stroke and so forth required by the electric X-type gun can be coped by one electric driving unit.

Denoted by 23 is a thrust bearing provided at the front portion of the motor 16, 24 is a bearing provided at the rear portion of the motor 16, 25 is an encoder, 26 is a conductive coupling unit for coupling between the motor 16 and the encoder 25.

With the electric X-type gun having the configuration described as above, the pressure application shaft 9 is pulled inside the motor 16 at the maximum when the pressure application driving body 8 is rendered in a state shown in Fig. 3 so that the gun arm 1 is positioned in an open position as shown in an imaginary line in Fig. 1.

From this state, when the rotary shaft 17 is rotated by driving the motor 16, the pressure application driving body 8 integrated with the rotary shaft 17 is rotated, which rotation is transmitted to the screw of the nut 20 provided in the pressure application shaft 9 and threaded with the screw of the screw shaft 18, causing the pressure application shaft 9 to move forward so as to be sequentially pushed out from the pressure application driving body 8. The forward movement of the pressure application shaft 9 causes the gun arm 1 to swing about the pivotal shaft 5 serving as a fulcrum, thereby causing the gun arms 1, 3 to execute the closing operation to move the electrode 2 toward the electrode 4. When the pressure application shaft 9 is extended to be rendered in a state where the workpiece (not shown) is clamped between the electrodes 2 and 4, as shown in Fig. 1, the gun executes a welding operation upon receipt of the power from the transformer 7.

When the motor 16 is reversely driven to rotate the rotary shaft 17 in an opposite direction upon completion of the welding operation, the screw shaft 18 is rotated, which rotation is transmitted to the nut 20 at the pressure application shaft 9 side, causing the pressure application shaft 9 to move backward so as to be sequentially pulled in the pressure application driving body 8. The backward movement of the pressure application shaft 9 causes the gun arm 1 to swing about the pivotal shaft 5 serving as a fulcrum, thereby causing the gun arms 1 and 3 to execute the opening operation to move the electrode 2 away from the electrode 4. The gun arm 1 is positioned in the open position as shown in the imaginary line in Fig. 1 in a state where the pressure application shaft 9 is returned to the original position shown in Fig. 3.

Meanwhile, since the motor 16 for driving the pressure application shaft 9 is combined with the pressure application driving body 8 together with a part of the pressure application shaft 9, the gun is rendered to be compact and small, and there is no interference with the workpiece and the jig. Further, the pressure application shaft 9 and the gun arm 1, and the pressure application driving body 8 and the gun arm 3 are connected with each other, respectively, by the pivotal shafts 10, 14 such as a hinge pin, thereby causing the swinging motion of the gun arm to be stabilized and executed naturally, and the attachment and detachment of these components as the electric driving unit to be executed with ease, and the maintenance thereof to be executed with ease and precision.

Still further, the pressure application driving body 8 is provided with the pressure application shaft 9 having a part which is driven by the motor 16 and pulled into the motor 16 and the rotary shaft 17 of the motor 16 is formed of the hollow shaft while the screw shaft 18 is fixed inside the rotary shaft 17, the nut 20 threading with the screw shaft 18 is provided in the pressure application shaft 9, and the hollow part 21 in which the tip end side of the screw shaft 18 is contained is formed inside the pressure application shaft 9 so that the pressure application driving body 8 can be made short in the direction of the movement of the pressure application shaft 9, and the motor 16 can be rendered small-sized.

The part of the pressure application shaft 9 protruding from the motor 16 has no screw and the outer surface of the pressure application shaft 9 is guided by the guide bearing 22 provided at the front end side of the motor 16, so that the pressure application shaft 9 can sufficiently endure the bending stress from the gun arm 1 side during the welding operation, further, a spatter and so forth from the pressure application shaft 9 hardly enters the motor 16. Still further, since the tip end side of the screw shaft 18 is positioned inside the hollow part 21 of the interior of the pressure application shaft 9, the nut 20 and the screw shaft 18 can be sufficiently protected.

### Second Embodiment

A second embodiment of the invention is described with reference to the attached drawings.

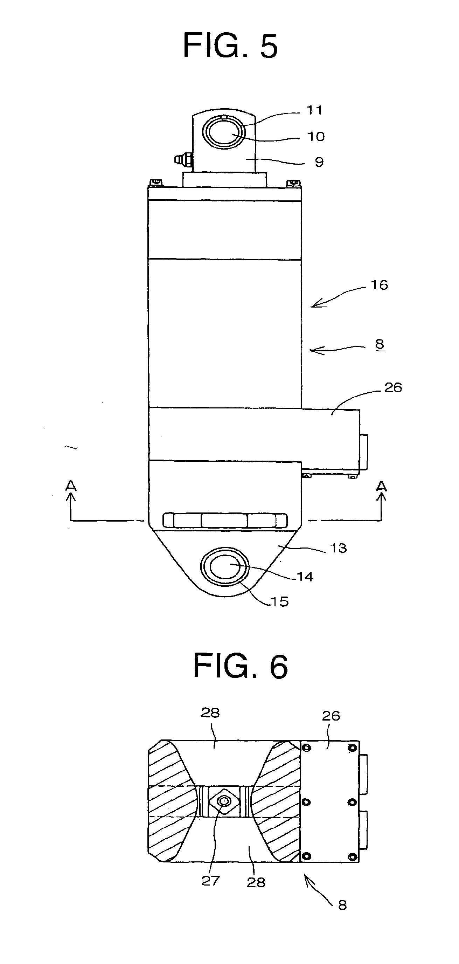

Fig. 5 is a front view of an electric driving unit according to the second embodiment of the invention in which a motor and a pressure application driving body are combined with each other, and Fig. 6 is a sectional view taken along arrows A-A in Fig. 5.

In Figs. 5 and 6, there are provided manual operation holes 28, 28 which direct from the lower end of the pressure application driving body 8 on both side surfaces toward a processing part 27 square or pentagonal in shape (refer to Fig. 3) formed at the rear end of the screw shaft 18.

Since other components of the second embodiment are substantially the same as those of the first embodiment, they are denoted by the same reference numerals and the explanation thereof is omitted.

In the case where the manual operation holes 28, 28 are provided, if the gun arms 1 and 3 execute the opening and closing operations due to power failure or trouble of the motor and the pressure application driving part and so forth, a tool is inserted through the manual operation holes 28, 28 to rotate the processing part 27, so that the screw shaft 18 is rotated by a force of rotation of the processing part 27, which rotation causes the gun arms 1, 3 to be opened and closed so as to be returned to desired positions, thereby obtaining the electric driving unit which is advantageous in maintenance thereof.

Meanwhile, although the processing part 27 square or pentagonal in shape (refer to Fig. 3) formed at the rear end of the screw shaft 18 is protruded toward the rear end of the screw shaft 18, it can be operated by a tool even if the processing part square or pentagonal in shape is formed to be pulled inside the rear end of the screw shaft 18.

## Claims

1. An electric driving unit for X-type gun comprising two gun arms (1, 3) journalled on a pivotal shaft (5), respectively, at the middle portions thereof, and provided with electrodes (2, 4) at tip ends which are opposite to each other, respectively, a pressure application shaft (9) connected to one gun arm (1) and a pressure application driving body (8) connected to the other gun arm (3), respectively, at the rear ends of both gun arms (1, 3), said electric driving unit for X-type gun further comprising :
a rotary shaft (17) provided in the motor (16) and formed of a hollow shaft to which a screw shaft (18) is secured;
a guide bearing (22) provided at the front end side of the motor (16) for guiding the pressure application shaft (9); and
a bearing (15) provided in a case (13) of the pressure driving body (8) at an end portion thereof for causing the other arm (3) to be journalled to the pressure application driving body (8) by a pivotal shaft (14).
said pressure application shaft (9) having:
a part to be driven by a motor (16) and pulled into the motor (16);
a nut (20) to be threaded with the screw shaft (18);
a hollow part (21) for containing therein a tip end side of the screw shaft (18); and
a bearing (11) for causing one gun arm (1) to be journalled to the pressure application shaft (9) by a pivotal shaft (10).

2. The electric driving unit for X-type gun according to Claim 1 further comprising manual operation holes (28, 28) for the screw shaft (18) provided at the lower end of the pressure application driving body (8) on the side faces thereof.
